# EUROPÄISCHE PATENTANMELDUNG

(11) **EP 1 207 600 A2**
(43) Veröffentlichungstag der Anmeldung: **22.05.2002**
(21) Anmeldenummer: 01126345.6
(22) Anmeldetag: 07.11.2001
(51) Int. Cl.: H02B 1/052

(54) **Elektrische Einrichtung oder Adapter mit Mitteln zur Befestigung auf einer Tragschiene**

(30) Priorität: 16.11.2000 DE 10056817
(71) Anmelder: Moeller GmbH, 53115 Bonn (DE)
(72) Erfinder: Küpper, Wilfried, 53474 Bad Neuenahr (DE); Messer, Mario, 53227 Bonn (DE)

(57) **Zusammenfassung**

Die Erfindung betrifft eine elektrische Einrichtung oder einen Adapter mit Mitteln zur Befestigung auf einer Tragschiene, wobei ein Gehäuse (4) mit einer in dessen Rückwand (8) an die Tragschiene (6) angepassten Ausnehmung (10), mit ersten und zweiten Vorsprüngen (13; 14) zur Aufnahme der ersten bzw. zweiten Randleiste (15; 16) der Tragschiene (6) versehen ist und ein Verriegelungsmittel, das gegen die Wirkung eines Federmittels (22) senkrecht zur Längsachse (18) der Ausnehmung (10) begrenzt verschiebbar ist, hinter die erste Randleiste (15) greifen kann. Um die Einrichtung (2) sowohl seitlich verschiebbar als auch unverschiebbar auf der Tragschiene (6) zu befestigen, ist in der Rückwand (8) ein Durchbruch (30) ausgebildet, in den eine von vorn zugängliche Kurvenscheibe (20) je nach Verdrehung mit jeweils einem von mehreren Kurvenabschnitten durch den Durchbruch (30) in unterschiedlich starke Verbindung mit der Tragschiene (6) tritt.

## Beschreibung

Die Erfindung betrifft eine elektrische Einrichtung oder Adapter, die Mittel zur Befestigung auf einer hutförmigen Tragschiene aufweisen, nach dem Oberbegriff von Anspruch 1.

Aus der Druckschrift DE-A1-4422021 ist eine zur Befestigung auf einer im Querschnitt hutförmigen Tragschiene geeignete elektrische Einrichtung bekannt. Die Einrichtung weist an der Rückseite ihres Gehäuses eine der Tragschiene angepasste Ausnehmung auf. An der ersten bzw. zweiten Begrenzung der Ausnehmung sind zwei erste bzw. zweite starre Vorsprünge mit einer ersten bzw. zweiten Gleitführung zur Aufnahme der ersten bzw. zweiten Randleiste der Tragschiene ausgebildet. Zwischen den ersten Vorsprüngen ist eine mit Federmitteln ausgestattete und hinter die erste Randleiste greifendes Verriegelungsmittel angeordnet. Von Nachteil ist, dass die elektrische Einrichtung nach dem Aufschnappen auf die Tragschiene zum Zwecke der genauen Positionierung nicht mehr ohne weiteres seitlich verschoben werden kann. Die Mittel zur Tragschienenbefestigung können ohne weiteres auf Adapter, über die elektrische Einrichtungen indirekt auf einer Tragschiene befestigt werden können, übertragen werden.

Aus der Druckschrift DE-U-7633361 ist eine Montageplatte mit Schnellbefestigung auf eine Tragschiene bekannt, die eine eckseitigen, starr gelagerten Exzenterklemmbolzen, an den diesem anschließenden Eckpunkten Anschlagbolzen und an dem diagonal gegenüberliegenden Eckpunkt ein unter die Tragschiene greifendes Hakenteil aufweist. Der Exzenterklemmbolzen besitzt einen Anschlag, der zusammen mit einer entsprechenden Aussparung der Montageplatte eine begrenzte Verdrehung des Bolzens zulässt, eine umlaufende Nut, in die eine Rastung der Montageplatte greift, sowie einen kopfseitigen Schlitz für ein Drehwerkzeug. Ein Reiheneinbaugerät nach DE-A1-19818023 ist mit zwei im Bereich seines Gerätebodens angeordneten Einrichtung zur Schnappfixierung auf einer Tragschiene versehen, deren beiden Randbereiche im Fügezustand von jeweils einem Schnapper quer zur ihrer Längsrichtung hintergriffen wird. Jeder Schnapper ist durch einen von der Betätigungsseite her angreifenden Drehangriff durch Trennschwenkung eine mit dem Schnapper verbundenen federelastischen Bolzens aus seiner Fügestellung lösbar.

Der Erfindung liegt daher die Aufgabe zugrunde, eine elektrische Einrichtung oder einen Adapter sowohl seitlich verschiebbar als auch unverschiebbar auf der Tragschiene befestigen zu können.

Ausgehend von einer elektrischen Einrichtung oder einem Adapter der eingangs genannten Art wird die Aufgabe erfindungsgemäß durch die kennzeichnenden Merkmale des unabhängigen Anspruches gelöst, während den abhängigen Ansprüchen vorteilhafte Weiterbildungen der Erfindung zu entnehmen sind.

Eine Kurvenscheibe als Verriegelungsmittel kann so verstellt werden, dass sie mit jeweils einem ihrer drei Kurvenabschnitte durch einen rückwandigen Durchbruch in Wirkung mit der ersten Randleiste der Tragschiene bringbar ist. Wenn der erste Kurvenabschnitt in den Durchbruch ragt, kann die Einrichtung oder der Adapter im Zusammenwirken mit der gegenüber der Tragschiene breiter bemessenen Ausnehmung leicht über die Tragschiene geschoben, anschließend daran locker angehängt und bei Bedarf wieder von der Tragschiene abgehoben werden. Wird der zweite Kurvenabschnitt in den Durchbruch hinein gedreht, so schiebt sich dieser verriegelnd hinter die erste Randleiste, wobei die Kurvenscheibe noch unter Federwirkung steht. Beim Drücken der Einrichtung oder des Adapters entgegen der Kraftwirkung des Federmittels wird die federnd gelagerte Kurvenscheibe über ihren zweiten Kurvenabschnitt soweit verschoben, dass die zweite Randleiste ausreichend aus dem Kraftschluss der zweiten Gleitführung gelöst wird. Damit kann die Einrichtung bzw. der Adapter mühelos entlang der Tragschiene seitlich verschoben werden, jedoch nicht von der Tragschiene abgehoben werden. Dies gestattet eine vorläufige Montage der Einrichtung, um beispielsweise mit seitlichem Freiraum die Einrichtung mit elektrischen Versorgungs-bzw. Informationsleitungen bequem zu verbinden, sowie eine anschließende Verschiebung der Einrichtung bzw. des Adapters in die endgültige Montageposition. In der endgültigen Montageposition wird der exzentrische dritte Kurvenabschnitt in den Durchbruch eingedreht und zunehmend kraftschlüssig mit der ersten Randleiste verklemmt. In dieser Verdrehposition der Kurvenscheibe ist die Einrichtung bzw. der Adapter gegen willkürliche oder von Stößen, Schocks oder Schwingungen verursachte Verschiebungen auf der Tragschiene gesichert.

Für den ersten Kurvenabschnitt empfiehlt sich eine den Randleisten angepasste geradlinige Ausbildung, insbesondere mit einer robust ausgebildeten ebenen stirnseitigen ersten Randfläche. Vorteilhaft ist eine gegenüberliegende geradlinige erste Anlagefläche für eine transversal beanspruchte Biegefeder.

Für den zweiten Kurvenabschnitt empfiehlt es sich ebenfalls eine den Randleisten angepasste geradlinige Ausbildung. Eine vorteilhafte Ausbildung des zweiten Kurvenabschnitts besteht weiterhin darin, dass er aus einer keilförmigen, beidseitig abgeschrägten zweiten Randfläche und einer radial zurückgesetzten, axial vorstehenden, parallel zur Drehachse der Kurvenscheibe verlaufenden zweiten Andrückfläche zusammengesetzt ist. Die von der Innenseite des Gehäuses weg gerichtete Abschrägung der zweiten Randfläche erlaubt im Zusammenwirken mit der ersten Randleiste ein Aufschnappen der Einrichtung oder des Adapters auf die Tragschiene. Die zur Innenseite des Gehäuses gerichtete Abschrägung der zweiten Randfläche bewirkt in Verbindung mit der ersten Randleiste eine begrenzte Klemmwirkung unter Andrücken der ersten Randleiste gegen die Ausnehmung. Die zweite Andrückfläche nimmt die Kraft von der ersten Randleiste beim Verschieben der Einrichtung oder des Adapters entgegen der Kraftwirkung des Federmittels auf. Auch hier ist eine gegenüber liegende geradlinige, entsprechende zweite Anlagefläche für eine transversal beanspruchte Biegefeder vorteilhaft.

Zur Erzielung einer kräftigen Klemmwirkung zwischen Kurvenscheibe und erster Randleiste ist eine exzentrisch Ausbildung des dritten Kurvenabschnitts von Vorteil. Eine vorteilhafte Ausbildung des dritten Kurvenabschnitts besteht weiterhin darin, dass dieser aus einer zur Innenseite des Gehäuses keilförmig abgeschrägten dritten Randfläche und einer radial zurückgesetzten, axial vorstehenden, parallel zur Drehachse der Kurvenscheibe verlaufenden dritten Andrückfläche zusammengesetzt ist. Die zur Innenseite gerichtete Abschrägung der dritten Randfläche bewirkt in Verbindung mit der ersten Randleiste ein kräftiges Andrücken der ersten Randleiste gegen die Ausnehmung, und die dritte Andrückfläche bewirkt das unverschiebliche Verklemmen gegen die erste Randleiste, wobei die untere Randleiste kräftig gegen die zweiten Gleitführungen gepresst wird.

Es ist vorteilhaft, die Verdrehung der Kurvenscheibe zu begrenzen, vorzugsweise durch eine nicht geschlossene kreisringartige Nut und eine in diese greifende Anformung, wobei das eine oder das andere dieser beiden Elemente innenseitig an der Rückwand und das jeweilige Gegenelement rückseitig an der Kurvenscheibe angeordnet ist.

Zur verschieblichen Lagerung dienen vorzugsweise ein Langloch in der Rückwand und ein darin geführter zylindrischer Ansatz der Kurvenscheibe.

Raumsparend ist die Anordnung der Kurvenscheibe und des Federmittels in entsprechend ausgebildeten Vertiefungen in der Rückwand des Gehäuses. Hierbei erweist sich die Sicherung der Kurvenscheibe und des Federmittels gegen Herausfallen aus den Vertiefungen durch einen Sicherungsring, der im übrigen den Zutritt zur Verdrehung der Kurvenscheibe gestattet, als vorteilhaft, insbesondere dann, wenn der Sicherungsring durch entsprechende Rastmittel an der Rückwand leicht zu befestigen ist.

Das vorderseitige Betätigen der Kurvenscheibe erfolgt zweckmäßig durch einen Schraubendreher, wofür zur Innenseite des Gehäuses weisende Kreuzschlitze vorzusehen sind. Das Gehäuse besteht vorteilhaft aus einem rückseitigen Gehäuseteil und einem vorderseitigen Gehäuseteil. Innere Baugruppen, z.B. Leiterplatten, oder zwischengelegte mittlere Gehäuseteile können problemlos so ausgebildet werden, dass bei abgenommenem vorderseitigem Gehäuseteil der Zugriff zu der Kurvenscheibe bei der Montage der im übrigen vollständigen Einrichtung bzw. des Adapters gewährleistet ist.

Weitere Einzelheiten und Vorteile der Erfindung ergeben sich aus dem folgenden, anhand von Figuren erläuterten Ausführungsbeispiel. Es zeigen
- Figur 1:: eine erfindungsgemäße Einrichtung bei entferntem vorderseitigem Gehäuseteil in Explosionsdarstellung;
- Figur 2:: die geöffnete Einrichtung nach Fig. 1 in einem ersten Zustand in Vorderansicht und bei entferntem Sicherungsring;
- Figur 3:: die Einrichtung entsprechend Fig. 2 in einem zweiten Zustand;
- Figur 4:: die Einrichtung entsprechend Fig. 2 in einem dritten Zustand;
- Figur 5:: die Kurvenscheibe aus Fig. 1 in vergrößerter perspektivischer Darstellung;
- Figur 6:: Die Kurvenscheibe nach Fig. 5 im Längsschnitt VI-VI.

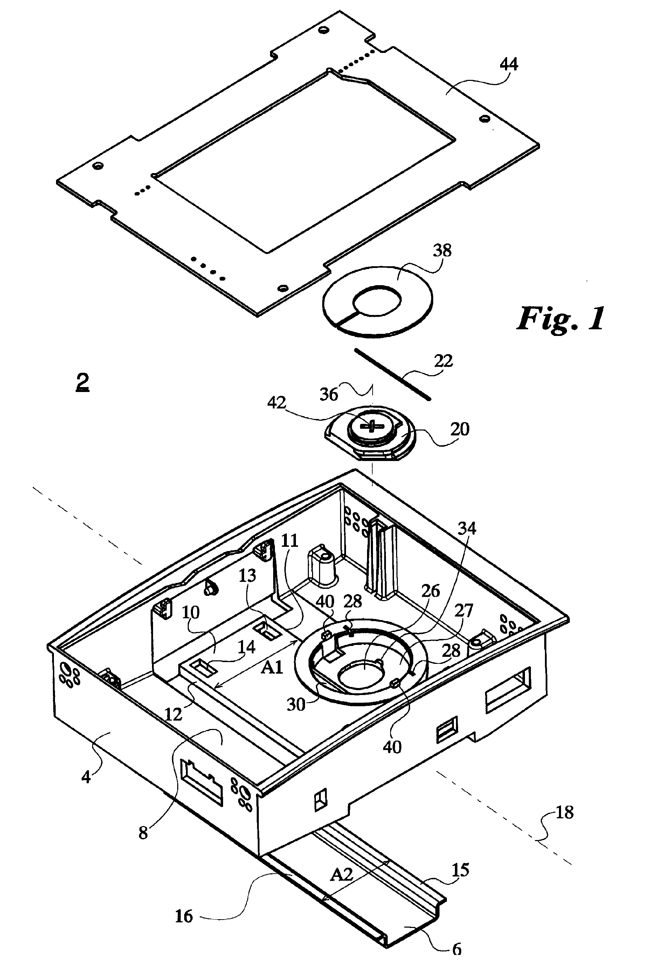

Nach Fig. 1 ist die elektrische Einrichtung 2, beispielweise eine elektrische Steuereinrichtung, von einem Gehäuse umgeben, von dem nur der rückseitige Gehäuseteil 4 gezeigt ist. Die Einrichtung 2 ist zur Befestigung auf einer hutförmigen Tragschiene 6 vorgesehen. Dazu ist in der Rückwand 8 des rückseitigen Gehäuseteils 4 eine an die Tragschiene angepasste Ausnehmung 10 ausgebildet. An der ersten Begrenzung 11 der Ausnehmung 10 sind in bekannter Weise zwei erste starre Vorsprünge 13 mit jeweils einer ersten Gleitführung zur Aufnahme der ersten Randleiste 15 der Tragschiene 6 ausgebildet, und symmetrisch dazu in Bezug auf die Längsachse 18 der Ausnehmung 10 sind an der zweiten Begrenzung 12 der Ausnehmung 10 zwei zweite starre Vorsprünge 14 mit jeweils einer zweiten Gleitführung zur Aufnahme der zweiten Randleiste 16 der Tragschiene 6 ausgebildet. In Fig. 1 ist jeweils nur der linke der beiden ersten bzw. zweiten Vorsprünge 13 bzw. 14 zu erkennen. Der innere Abstand A1 zwischen der ersten und der zweiten Begrenzung 11, 12 sowie zwischen den ersten und den zweiten Gleitführungen ist etwas größer als der äußere Abstand A2 zwischen den Randleisten 15, 16 gewählt, um eine begrenzte Verschiebbarkeit der Einrichtung 2 auf der Tragschiene 10 senkrecht zur Längsachse 18 zu gewährleisten. Weiterhin ist ein zwischen den beiden ersten Vorsprüngen 13 angeordnetes Verriegelungsmittel in Form einer Kurvenscheibe 20 vorgesehen, die bei auf der Tragschiene 6 aufgesetzter Einrichtung 2 hinter die erste Randleiste 15 greift und gegen die Wirkung eines im Gehäuseteil 4 gelagerten Federmittels 22 in Form einer Biegefeder senkrecht zur Längsachse 18 der Ausnehmung 10 begrenzt verschiebbar ist.

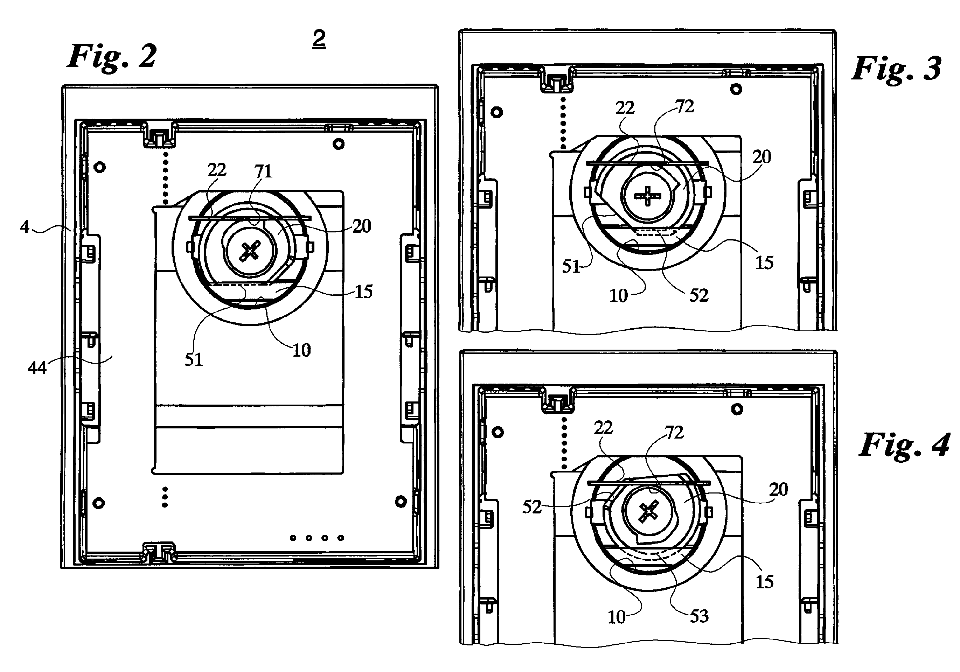

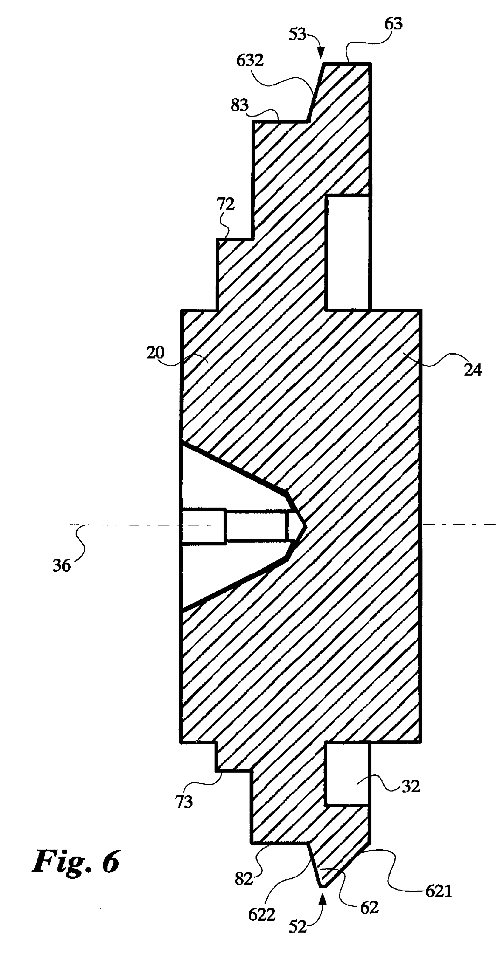

Die Kurvenscheibe 20 ist in einer zylindrischen ersten Vertiefung 27 der Rückwand 8 versenkt. An die erste Vertiefung 27 grenzen zwei parallel zur Längsachse 18 verlaufenden zweite Vertiefungen 28, die außermittig, von der Längsachse 18 fortgerichtet, zur ersten Vertiefung 27 verlaufen und das Federmittel 22 mit beiden Enden aufnehmen. Das Federmittel 22 wirkt in noch näher zu beschreibender Weise mit der Kurvenscheibe 20 zusammen. Im Bereich der ersten Begrenzung 11 ist in der ersten Vertiefung 27 ein Durchbruch 30 ausgebildet, durch den die Kurvenscheibe 20 randseitig in die Ausnehmung 10 ragt. Die Kurvenscheibe 20 lagert mit einem rückseitigen, d.h. einem von der Innenseite des Gehäuses 4 fortweisenden, zylindrischen Ansatz 24 (Fig. 6) in einem Langloch 26, das sich senkrecht zur Längsachse 18 der Ausnehmung 10 erstreckt. In der Kurvenscheibe 20 ist rückseitig weiterhin eine kreisringförmige Nut 32 eingelassen (Fig. 6), die über eine von der Rückwand 8 ausgehende Anformung 34 geführt wird. Die Nut 32 ist nicht geschlossen, so dass sich in beiden Drehrichtungen der Kurvenscheibe 20 um ihre Drehachse 36 ein Begrenzung ergibt. Im eingesetzten Zustand werden die Kurvenscheibe 20 und das Federmittel 22 gegen Herausfallen durch einen Sicherungsring 38 gehalten, der die Vertiefungen 27 und 28 ausreichend abdeckt. Für den Sicherungsring 38 seinerseits sind an die erste Vertiefung 27 angrenzend in der Rückwand 8 zwei gegenüber stehende Rastmittel 40 vorgesehen. Die Kurvenscheibe 20 ist zur Drehbetätigung mit Kreuzschlitzen 42 versehen. In das rückseitige Gehäuseteil 4 ist des weiteren eine mit elektronischen Baugruppen bestückte Leiterplatte 44 einzusetzen. Die Leiterplatte 44 ist ebenso wie der Sicherungsring 38 in der Mitte ausgespart, so dass die Kurvenscheibe 20 bei abgenommenem vorderseitigem Gehäuseteil für ein Drehwerkzeug, insbesondere für einen Schraubendreher, frei zugänglich ist. Die von vorn, d.h. von der Innenseite des Gehäuses 4, zugängliche Kurvenscheibe 20 enthält gemäß Fig. 2 bis Fig. 6 mehrere, je nach Verdrehung der Kurvenscheibe 20 durch den Durchbruch 30 in die Ausnehmung 10 ragende Kurvenabschnitte 51 bis 53.

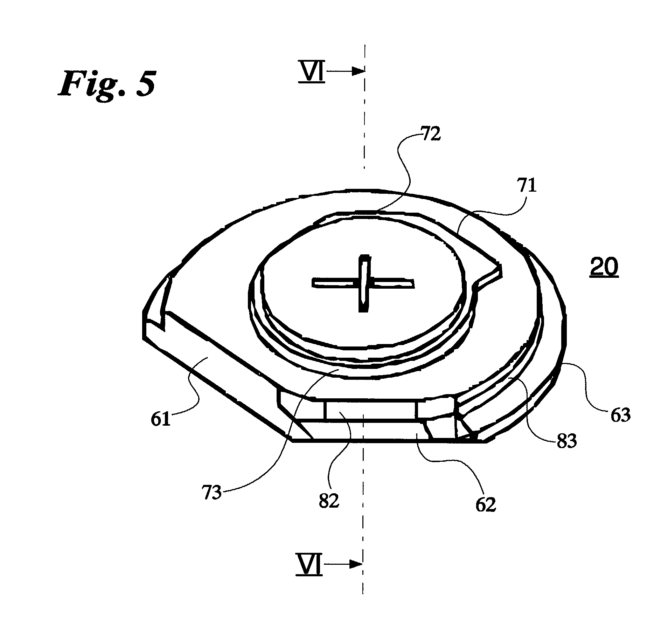

Gemäß Fig. 2 ist der erster Kurvenabschnitt 51 bei auf der zweiten 16 Randleiste aufgesetzten zweiten Gleitführung durch Verschieben der Einrichtung 2 senkrecht zur Längsachse 18 der Ausnehmung 10 und unter Wirkung des Federmittels 22 federnd hinter die erste Randleiste 15 bringbar. Der erste Kurvenabschnitt 51 ist geradlinig ausgebildet und mit einer ebenen, ersten Randfläche 61 versehen (Fig. 5), die parallel zur Drehachse 36 verläuft. Gegenüber dem ersten Kurvenabschnitt 51 ist an der Kurvenscheibe 20 eine geradlinige erste Anlagefläche 71 für das Federmittel 22 ausgebildet. In diesem Zustand kann die Einrichtung 2 im Zusammenwirken mit der gegenüber der Tragschiene 6 breiter bemessenen Ausnehmung 10 leicht über die Tragschiene 6 geschoben, anschließend daran locker angehängt und bei Bedarf wieder von der Tragschiene 6 abgehoben werden.

Gemäß Fig. 3 greift der an den ersten Kurvenabschnitt 51 sich anschließende zweite Kurvenabschnitt 52 durch Verdrehen der Kurvenscheibe 22 im Uhrzeigersinn unter Wirkung des Federmittels 22 federnd ständig hinter die erste Randleiste 15. Der zweite Kurvenabschnitt 52 ist ebenfalls geradlinig ausgebildet. Der zweite Kurvenabschnitt 52 setzt sich gemäß Fig. 5 und Fig. 6 aus einer keilförmigen, beidseitig abgeschrägten zweiten Randfläche 62 und einer radial zurückgesetzten, axial vorstehenden, parallel zur Drehachse 36 verlaufenden zweiten Andrückfläche 82 zusammen. An der Kurvenscheibe 20 ist gegenüber dem zweiten Kurvenabschnitt 52 eine im wesentlichen geradlinige zweite Anlagefläche 72 für das Federmittel ausgebildete. Wird der zweite Kurvenabschnitt 52 in den Durchbruch 30 hinein gedreht, so schiebt sich dieser verriegelnd hinter die erste Randleiste 15, wobei die Kurvenscheibe 20 noch unter der Wirkung des Federmittels 22 steht. Beim Drücken der Einrichtung 2 entgegen der Kraftwirkung des Federmittels (in Fig. 3 nach oben) wird die federnd gelagerte Kurvenscheibe 20 gegen die erste Randleiste 15 soweit verschoben, dass die zweite Randleiste 16 ausreichend aus dem Kraftschluss der zweiten Gleitführung gelöst wird. Damit kann die Einrichtung 2 mühelos entlang der Tragschiene 6 seitlich verschoben werden, jedoch nicht von der Tragschiene 6 abgehoben werden. Durch die nach hinten gerichtete Abschrägung 621 der zweiten Randfläche 62 kann die Einrichtung 2 auf die Tragschiene 6 geschnappt werden. In Verbindung mit dem Federmittel 22 wird durch die nach vorn gerichtete Abschrägung 622 der zweiten Randfläche 62 die ersten Randleiste 15 federnd gegen die Ausnehmung 10 gedrückt. Die zweite Andrückfläche 82 nimmt die Kraft von der ersten Randleiste 15 beim Verschieben der Einrichtung 2 entgegen der Kraftwirkung des Federmittels 22 auf.

Gemäß Fig. 4 greift der an den zweiten Kurvenabschnitt 52 sich anschließender dritter Kurvenabschnitt 53 durch weiteres Verdrehen der Kurvenscheibe 20 klemmend hinter die erste Randleiste 16. Der dritte Kurvenabschnitt 53 ist bei fortschreitender Verdrehung der Kurvenscheibe 20 im Uhrzeigersinn exzentrisch mit zunehmendem Radius ausgebildet. Der dritte Kurvenabschnitt 53 ist gemäß Fig. 5 und Fig. 6 aus einer keilförmigen, vorderseitig abgeschrägten dritten Randfläche 63 und einer radial zurückgesetzten, axial vorstehenden sowie parallel zur Drehachse 36 verlaufenden dritten Andrückfläche 83 zusammengesetzt. In der endgültigen Montageposition wird der exzentrische dritte Kurvenabschnitt 53 in den Durchbruch 30 eingedreht und gegen die Wirkung des Federmittels 22 zunehmend kraftschlüssig mit der ersten Randleiste 15 verklemmt. Das Federmittel 22 liegt hierbei an einer dritten, kreisbogenförmigen Anlagefläche 73, die gegenüber dem dritten Kurvenabschnitt 53 ausgebildet ist. Durch die starke Klemmwirkung zwischen dem dritten Kurvenabschnitt 53 und der erster Randleiste 15 ist die Position der Einrichtung 2 auf der Tragschiene 6 gesichert. Die nach vorn gerichtete Abschrägung 632 der dritten Randfläche 63 bewirkt ein kräftiges Andrücken der ersten Randleiste 15 gegen die Ausnehmung 10. Die dritte Andrückfläche 83 bewirkt das Verklemmen gegen die erste Randleiste 15, wobei die zweite Randleiste 16 kräftig gegen die zweiten Gleitführungen gepresst wird.

## Patentansprüche

1. Elektrische Einrichtung oder Adapter mit Mitteln zur Befestigung auf einer Tragschiene, aufweisend
- ein Gehäuse (4) mit einer in dessen Rückwand (8) an die Tragschiene (6) angepassten Ausnehmung (10),
- an der ersten und zweiten Begrenzung (11; 12) der Ausnehmung (10) ausgebildete jeweils erste und jeweils zweite starre Vorsprünge (13; 14) mit einer jeweils ersten und jeweils zweiten Gleitführung zur Aufnahme der ersten bzw. zweiten Randleiste (15; 16) der Tragschiene (6),
- ein zwischen den ersten Vorsprüngen (13) angeordnetes und hinter die erste Randleiste (15) greifendes Verriegelungsmittel, das gegen die Wirkung eines im Gehäuse (4) gelagerten Federmittels (22) senkrecht zur Längsachse (18) der Ausnehmung (10) begrenzt verschiebbar ist,
**dadurch gekennzeichnet, dass**
- zwischen der ersten und der zweiten Begrenzung (11; 12) sowie zwischen den ersten und den zweiten Gleitführungen ein Spiel gegenüber den Randleisten (15; 16) besteht,
- in der Rückwand (8) im Bereich der ersten Begrenzung (11) ein Durchbruch (30) ausgebildet ist,
- das Verriegelungsmittel aus einer von der Innenseite der Rückwand (8) zugänglichen Kurvenscheibe (20) mit mehreren, je nach Verdrehung der Kurvenscheibe (20) durch den Durchbruch (30) in die Ausnehmung (10) ragenden Kurvenabschnitten (51; 52; 53) besteht,
- ein erster Kurvenabschnitt (51) bei an der zweiten Begrenzung (12) anliegender zweiter Randleiste (16) ein Spiel zwischen sich und der ersten Randleiste (15) belässt und die zweiten Vorsprünge (14) bei auf der ersten Randleiste (15) aufsitzendem ersten Kurvenabschnitt (51) gerade noch hinter die zweite Randleiste (16) greifen,
- ein an den ersten Kurvenabschnitt (51) sich anschließender zweiter Kurvenabschnitt (52) unter Wirkung des Federmittels (22) federnd ständig hinter die erste Randleiste (15) greift und
- ein an den zweiten Kurvenabschnitt (52) sich anschließender dritter Kurvenabschnitt (53) durch weiteres Verdrehen der Kurvenscheibe (20) klemmend hinter die erste Randleiste (15) greift.

2. Einrichtung oder Adapter nach Anspruch 1, **dadurch gekennzeichnet, dass** der erste Kurvenabschnitt (51) geradlinig ausgebildet ist.

3. Einrichtung oder Adapter nach Anspruch 2, **dadurch gekennzeichnet, dass** der erste Kurvenabschnitt (51) mit einer ebenen, ersten Randfläche (61) versehen ist, die parallel zur Drehachse (36) der Kurvenscheibe (20) verläuft.

4. Einrichtung oder Adapter nach Anspruch 2, **dadurch gekennzeichnet, dass** an der Kurvenscheibe (20) gegenüber dem ersten Kurvenabschnitt (51) eine geradlinige erste Anlagefläche (71) für das Federmittel (22) in Form einer Biegefeder ausgebildet ist.

5. Einrichtung oder Adapter nach Anspruch 1, **dadurch gekennzeichnet, dass** der zweite Kurvenabschnitt (52) im wesentlichen geradlinig ausgebildet ist.

6. Einrichtung oder Adapter nach Anspruch 5, **dadurch gekennzeichnet, dass** der zweite Kurvenabschnitt (52) aus einer keilförmigen, beidseitig abgeschrägten zweiten Randfläche (62) und einer radial zurückgesetzten, axial vorstehenden, parallel zur Drehachse (36) der Kurvenscheibe (20) verlaufenden zweiten Andrückfläche (82) zusammengesetzt ist.

7. Einrichtung oder Adapter nach Anspruch 5, **dadurch gekennzeichnet, dass** an der Kurvenscheibe (20) gegenüber dem zweiten Kurvenabschnitt (22) eine im wesentlichen geradlinige zweite Anlagefläche (72) für das Federmittel (22) in Form einer Biegefeder ausgebildete ist.

8. Einrichtung oder Adapter nach Anspruch 1, **dadurch gekennzeichnet, dass** der dritte Kurvenabschnitt (53) bei fortschreitender Verdrehung der Kurvenscheibe (20) mit zunehmendem Radius ausgebildet ist.

9. Einrichtung oder Adapter nach Anspruch 8, **dadurch gekennzeichnet, dass** der dritte Kurvenabschnitt (53) aus einer keilförmigen, zur Innenseite des Gehäuses (4) abgeschrägten dritten Randfläche (63) und einer radial zurückgesetzten, axial vorstehenden, parallel zur Drehachse (36) der Kurvenscheibe (20) verlaufenden dritten Andrückfläche (83) zusammengesetzt ist.

10. Einrichtung oder Adapter nach Anspruch 1, **dadurch gekennzeichnet, dass** in der Kurvenscheibe (20) eine nicht geschlossene kreisringartige Nut (32) vorgesehen ist, in die eine von der Rückwand (8) ausgehende Anformung (34) ragt.

11. Einrichtung oder Adapter nach Anspruch 1, **dadurch gekennzeichnet, dass** in der Rückwand (8) eine nicht geschlossene kreisringartige Nut vorgesehen ist, in die eine von der Kurvenscheibe ausgehende Anformung ragt.

12. Einrichtung oder Adapter nach Anspruch 1, **dadurch gekennzeichnet, dass** die Kurvenscheibe (20) mit einem von der Innenseite des Gehäuses (4) abweisenden zylindrischen Ansatz (24) in einem Langloch (26) lagert.

13. Einrichtung oder Adapter nach Anspruch 1, **dadurch gekennzeichnet, dass** die Kurvenscheibe (20) und das Federmittel (22) in entsprechenden Vertiefungen (27; 28) der Rückwand (8) versenkbar sind.

14. Einrichtung oder Adapter nach Anspruch 13, **dadurch gekennzeichnet, dass** die Kurvenscheibe (20) und das Federmittel (22) durch einen Sicherungsring (38) gehaltert werden.

15. Einrichtung oder Adapter nach Anspruch 14, **dadurch gekennzeichnet, dass** in der Rückwand (8) Rastmittel (40) für den Sicherungsring (38) vorgesehen sind.

16. Einrichtung oder Adapter nach Anspruch 1, **dadurch gekennzeichnet, dass** die Kurvenscheibe (20) mit zur Innenseite des Gehäuses (4) weisenden Kreuzschlitzen (42) ausgestattet ist.

17. Einrichtung oder Adapter nach Anspruch 1, **dadurch gekennzeichnet, dass** das Gehäuse wenigstens aus einem rückseitigen Gehäuseteil (4) und einem vorderseitigen Gehäuseteil besteht und dass bei abgenommenem vorderseitigem Gehäuseteil der Zutritt für ein Werkzeug zum Verdrehen der Kurvenscheibe (20) gewährleistet ist.
